# EUROPÄISCHE PATENTSCHRIFT

(11) **EP 1 597 326 B1**
(45) Veröffentlichungstag und Bekanntmachung des Hinweises auf die Patenterteilung: **02.01.2008**
(21) Anmeldenummer: 04706180.9
(22) Anmeldetag: 29.01.2004
(51) Int. Cl.: C09D 11/10, B41M 3/12, C08F 26/00, B44C 1/17

(54) **STRAHLENHÄRTBARE DRUCKMEDIEN, DAMIT HERGESTELLTE ABZIEHBILDER UND VERFAHREN ZUR HERSTELLUNG KERAMISCHER DEKORE**
RADIOHARDENABLE PRINTING MEDIA, TRANSFER PICTURES PRODUCED THEREWITH, AND METHOD FOR PRODUCING CERAMIC DECORATIONS
FLUIDES D'IMPRESSION DURCISSABLES PAR RAYONNEMENT, IMAGES A DECALQUER CONTENANT LESDITS FLUIDES ET PROCEDE DE FABRICATION DE DECORS CERAMIQUES

(30) Priorität: 28.02.2003 DE 10308971
(43) Veröffentlichungstag der Anmeldung: 23.11.2005
(73) Patentinhaber: Ferro GmbH, 60327 Frankfurt (DE)
(72) Erfinder: RAGNETTI, Maurizio, Mainz-kostheim D-55246 (DE); WALTER, Frank, Rüsselsheim D-65428 (DE)
(74) Vertreter: Reinhardt, Markus
(86) Internationale Anmeldenummer: PCT/EP2004/000800
(87) Internationale Veröffentlichungsnummer: WO 2004/076569

(56) Entgegenhaltungen:
- DE-A- 4 441 463
- US-A- 4 666 756
- US-A- 5 319 060
- US-A- 5 558 911
- US-A- 5 629 359

## Beschreibung

Die Erfindung richtet sich auf neue strahlenhärtbare Druckmedien, welche ein polymeres plastisches Bindemittel mindestens eine strahlenhärtbare monomere Verbindung enthalten und sich durch eine verbesserte Flexibilität auszeichnen. Die Erfindung richtet sich ferner auf Abziehbilder, welche unter Verwendung eines erfindungsgemäßen strahlenhärtbaren Druckmediums hergestellt wurden, sowie ein Verfahren zur Herstellung keramischer Dekore, wobei ein Dekorpräparat, welches ein erfindungsgemäßes Druckmedium enthält auf das zu dekorierende keramische Substrat aufgebracht, mittels Strahlen gehärtet und anschließend unter üblichen Bedingungen gebrannt wird.

Zur Herstellung keramischer Dekore sind verschiedene direkte oder indirekte Druckverfahren bekannt, wobei zu letzteren auch die Abziehbildtechnik gehört. Zur Dekoration wird somit ein Dekorpräparat das üblicherweise eine dekorbildende Komponente, beispielsweise ein Pigment, ein Pigmentgemisch, eine Pigmentvorstufe, eine Edelmetallverbindung oder metallische Pulver sowie ein flüssiges oder pastöses Druckmedium enthält auf das Substrat oder einen Abziehbildträger aufgedruckt. Bei einem strahlenhärtenden Druckmedium schließe sich an den Auftrag der Dekorschicht eine Härtung mittels einer Strahlungsquelle, insbesondere einer UV-Quelle an. Schließlich wird die auf das Substrat aufgebrachte Dekorschicht in an sich bekannter Weise eingebrannt.

Die Verwendung strahlenhärtbarer Druckmedien gewinnt zunehmend an Bedeutung, weil damit ökologische Probleme, welche durch sich durch das Verdunsten von Lösungsmitteln im Dekorationsverfahren ergeben können, reduziert oder vermieden werden. Bisher bekannte strahlenhärtbare Druckmedien, welche zur Herstellung von Abziehbildern geeignet sind, weisen vielfach den Nachteil einer ungenügenden Flexibilität und/oder einer ungenügenden Reaktivität auf. Eine hohe Reaktivität eines Druckmediums führt zwar zu einer raschen Härtung mittels beispielsweise UV-Strahlung unter erhalt einer klebfreien Oberfläche, jedoch kommt es mit zunehmender Lagerzeit der Abziehbildern, welcher ein derartiges strahlenhärtendes Druckmedium enthalten, zu einer Versprödung der Abziehbildern, so dass es bei der Applikation derselben zu Brüchen und damit zu Dekorfehlern kommt. Andererseits weisen strahlenhärtbare Druckmedien, welche aufgrund ihrer Zusammensetzung mit einem hohen Anteil an flexibilisierenden Monomeren eine bleibende Flexibilität auf, jedoch werden hierbei unter den üblichen Bedingungen einer Strahlenhärtung Dekore mit zu hoher Oberflächenklebrigkeit erhalten; solche Abziehbilder sind unbrauchbar, weil sie weder überdruck - noch stapelbar sind. Es sind zwar unterschiedlichst zusammengesetzte strahlenhärtbare Druckmedien bekannt, jedoch lassen diese bezüglich der einen oder anderen an sie gestellten Anforderungen oder Kombinationen von Anforderungen Wünsche offen.

Die DE-Patentschrift 30 48 823 lehrt eine mit UV-Strahlung härtbare Harzmasse, welche aus einem speziellen gesättigtem Copolymerester, einer polymerisierbaren Komponente aus einer Verbindung mit einer polymerisierbaren Doppelbindung im Molekül und einer Verbindung mit zwei oder mehr polymerisierbaren Doppelbindung im Molekül und mindestens einem Photosensibilisator besteht; zusätzlich kann die Harzmasse andere synthetische Harze, wie organische Isocyanatverinbindungen, Pigmente, Verlaufshilfsmittel und Inhibitoren der thermischen Polymerisation enthalten. Bei der polymerisierbaren Komponente handelt es sich vorzugsweise um 10 bis 70 Gew.-% eines Monoacrylats und/oder Monomethacrylats, 5 bis 50 Gew.-% einer oder mehrer Acrylate oder Methyacrylate mit mindestens zwei polymerisierbaren Doppelbindungen und 20 bis 70 Gew.-% eines oder mehrerer Diacrylate oder Dimethacrylate mit einem Molekulargewicht von mehr als 500. Als Photoiniatiatoren enthalten diese Systeme eine oder mehrere Verbindungen aus der Reihe der Benzoine, Anthrachinone, Benzophenone, Xanthone und Thioxanthone.

In der zuvor genannten DE 30 48 823 wird als monofunktionelles Acrylat auch Tetrahydrofurfurylacrylat also ein Acrylat dessen Alkoholkomponente einen heterozyklischen Ring enthält verwendet. Hinweise wonach sich durch die Verwendung heterozyklischer Acrylate bestimmte Vorteile ergeben könnten, lassen sich diesem Dokument jedoch nicht entnehmen.

Aus der DE-Patentschrift 38 19 414 sind Glanzedelmetallpräparate für die Dekoration von Glas, Keramik und Porzellan bekannt, welche eine lösliche organische Edelmetallverbindung, ein mehrzyklisches Acrylat, wie Isobornylacrylat und/oder Dizyklopentadienylacrylat und einen Photoinitiator enthalten. Zusätzlich können diese Präparate andere polymerisierbare Verbindungen darunter N-Vinylpyrrolidon enthalten. Weitere Bestandteile des eine lösliche organische Edelmetallverbindung enthaltenden Mediums sind Oligomere mit Acrylat- und/oder Methacrylat-Gruppen.

Die JP-Offenlegungsschrift 141473 (1984) richtet sich gleichfalls auf Edelmetalldekore, auf keramischen Erzeugnissen, wobei sowohl das Medium der Bildschicht als auch die Deckschicht strahlenhärtbare Komponenten enthalten.

Im Bestreben, die Nachteile der strahlenhärtenden Medien zu überwinden, wird in den EP 52 763 und 52 764 A1 vorgeschlagen, solche Druckmedien zu verwenden, welche Präpolymere von polyfunktionellen Acrylatharzen, wie acrylierten Polyestern, mono-, di- und trifunktionelle Acrylate, Polymethyl-methacrylate mit definiertem Polymerisationsgrad und einen Photoinitiator enthalten. Gemäß EP 0 106 628 A1 ist es möglich, weiter verbesserte strahlenhärtende Druckmedien zu erhalten, indem dieses im wesentlichen aus einem vollständig polymerisierten thermoplatischen Harz und einem strahlenhärtenden Verdünnungsmittel besteht und mehrfunktionelle Acrylatharze oder acrylierte Polyester ohne Nachteil für die Brenneigenschaften weggelassen werden können.

Abziehbilder deren Herstellung ein strahlenhärtbares Druckmedium zum Einsatz kam, und welche eine verbesserte Flexibilität aufweisen, lassen sich gemäß US-Patent 4,666,756 dadurch erhalten, das das bei der Herstellung des Abziehbilds verwendende Druckmedium ein Diacrylat oder Dimehtacrylat eines Oligoalkylenglykols enthält. Die Reaktivität derartiger Systeme ist vielfach jedoch ungenügend, so dass die damit hergestellten Dekorfilme entweder eine zu lange Härtungsdauer erfordern und/oder klebrig bleiben.

Das Patent US 5,629,359 bezieht sich auf strahlungshärtbare Zusammensetzungen, die ein (2-Oxo-1-pyrrolidinyl)alkyl-Acrylat oder-Methacrylat als reaktives Verdünnungsmittel umfassen. Diese Zusammensetzungen eignen sich für die Herstellung von Beschichtungen, die sich durch eine gute Haftung auf den verschiedensten Substraten, eine große Oberflächenhärte, eine verbesserte Beständigkeit gegen Abrieb und gegen Chemikalien und gute mechanische Eigenschaften auszeichnen.

Das Patent US 5,558,911 betrifft ein Verfahren zur Lackierung von Gegenständen mit Polymerisate enthaltenden Pulverlacken, die auf die Oberfläche des zu lackierenden Substrates aufgebracht, aufgeschmolzen und durch UV-Strahlung vernetzt werden. Bei diesem Verfahren werden als Polymerverbindungen Copolymere aus a) einem Monomeren der Formel CH₂=C(R¹)-CO-OR² oder CH₂=C(R¹)-CO-NR³R⁴, b) mindestens einer von (a) verschiedenen copolymerisierbaren ethylenisch ungesättigten organischen Verbindung, sowie (c) mindestens einem copolymerisierbaren ethylenisch ungesättigten, im triplettangeregten Zustand zur Wasserstoffabstraktion befähigten aromatischen oder teilaromatischen Keton eingesetzt.

Das Patent US 5,319,060 bezieht sich auf ein Verfahren zur Herstellung eines ungesättigten Esterharzes mit einer verbesserten Lagerungsstabilität, wobei eine Epoxidverbindung und eine polymerisierbare ungesättigte Monocarbonsäure in Anwesenheit eines dreiwertigen Phosphorkatalysators zur Reaktion gebracht werden.

Die DE 44 41 463 A1 bezieht sich auf eine geruchsarme Klebstoffzusammensetzung auf der Basis von Urethangruppen enthaltenden (Meth)acrylaten sowie deren Verwendung.

Das Patent US 4,666,756 beschreibt ein bedrucktes Transferpapier zur Dekoration von Keramik, das ein Grundpapier, eine Dekorfarbenschicht und eine Deckschicht umfasst, wobei die Dekorfarbenschicht und/oder die Deckschicht ein Bindemittel enthält, das ein Gemisch eines Polymeren und/oder Copolymeren und einer photopolymerisierbaren Verbindung umfasst.

Aufgabe der vorliegenden Erfindung ist es demgemäß, weitere strahlenhärtbare Druckmedien mit einem verbesserten Eigenschaftsprofil zur Verfügung zu stellen.

Gemäß einer weiteren Aufgabe sollte die Eigenschaftskombination aus Reaktivität und Flexibilität derart sein, dass damit hergestellte Abziehbilder auch nach längerer Lagerzeit eine ausreichende Flexibilität aufweisen, so dass fehlerfreie Dekore erhältlich sind.

Gemäß einer weiteren Aufgabe der Erfindung sollten Abziehbilder zur Verfügung gestellt werden, welche unter üblichen Bedingungen einer Strahlenhärtung klebefrei aushärten und somit überdruckfähig und stapelbar sind. Die vorgenannten Aufgaben sowie weiteren Aufgaben die sich aus der nachfolgenden Beschreibung herleiten, werden durch das anspruchsgemäße strahlenhärtbare Druckmedium gelöst.

Gegenstand der Erfindung ist somit ein strahlenhärtbares Druckmedium zur Herstellung keramischer Dekore, umfassend ein polymeres thermoplastisches Bindemittel und mindestens eine strahlenhärtbare monomere Verbindung aus der Reihe der einen heterocyclischen Ring enthaltenden olefinischen Verbindungen, wobei das polymere Bindemittel in der monomeren Verbindung löslich ist, wobei der heterocyclische Ring 5 bis 6 Ringglieder und als Heteroatom mehrere Sauerstoffatome enthält, dadurch gekennzeichnet, dass mindestens eine strahlenpolymerisierbare Vinyl-, Acryl- oder Methacrylgruppe direkt oder über ein einbis sechsgliedriges Brückenglied am heterocyclischen Ring gebunden ist, ein einem Ring-Heteroatom benachbartes Kohlenstoffatom mindestens ein abstrahierbares Wasserstoffatom aufweist und die polymerisierbare monomere Verbindung einen 1,3-Dioxolan-, 1,3- oder 1,4-Dioxanring und einen (Meth)acryloxy-(C₁-C₄)-alkyl- oder (Meth)arcyloy-amino-(C₁-C₄)-alkylsubstituenten aufweist.

Die Unteransprüche richten sich auf bevorzugte Ausführungsformen des erfindungsgemäßen Druckmediums.

Weitere Ansprüche betreffen ein Abziehbild unter Einsatz eines erfindungsgemäßen Druckmediums sowie ein Verfahren zu Herstellung eines keramischen Dekors unter Verwendung eines erfindungsgemäßen Druckmediums.

Erfindungswesentliches Merkmal ist, dass das strahlenhärtbare Druckmedium mindestens eine strahlenhärtbare monomere Verbindung enthält, welche einen heterozyklischen Ring und mindestens ein abstrahierbares Wasserstoffatom an einem dem Heteroatom benachbarten Kohlenstoffatom aufweist.

Bei dem heterozyklischen Ring handelt es sich um einen 1,3-Dioxolan-, 1,3- oder 1,4-Dioxanring. Besonders bevorzugte polymerisierbare Verbindungen mit einem heterozyklischen Ring sind Trimethylolethanmonoformal- und Trimethylolpropanmonoformal-, Mono(meth)acrylsäureester.

Bei dem thermoplastischen polymeren Bindemittel kann es sich um unterschiedliche Stoffklassen handelt, darunter Polymerisate und Copolymerisate, Polykondensate und Polyadditionsharze. Der Polymerisations- bzw. Polykondensationsgrad dieser Bindemittel wird derart gewählt, dass eine ausreichende Verträglichkeit mit der monomeren Verbindung mit dem heterozyklischen Ring gesichert ist. Unter den Bindemitteln kommen bevorzugt Polymere und/oder Copolymere von Acrylaten und Methacrylaten der allgemeinen Formel

CH₂ = CR¹-COOR²

in betracht, worin R¹ für H oder CH₃ und R² für H, Alkyl, Zykloalkyl, Aralkyl oder Aryl mit insgesamt 1 bis 20 C-Atomen steht. Beispielhaft genannt werden Methyl(meth)acrylat, Ethyl(meth)acrylat, n-Propyl(meth)acrylat, Isopropyl(meth)acrylat, n-Butyl(meth)acrylat, Zyklohexyl(meth)acrylat, Benzyl(meth)acrylat und Phenyl(meth)acrylat. Besonders bevorzugt sind Copolymere aus Methyl(meth)acrylat und n-Butyl(meth)acrylat. Das polymere Bindemittel kann zusätzlich auch andere polymerisierbare Verbindungen, wie Ethylen, Styrol, Butadien, Isobutylen, Isopren, Vinylacetat, Isobutyl, Isobutylvinylether und Acrylnitril enthalten.

Alternativ zu diesen durch Polymerisation an einer oder mehrerer polyermisierbaren monomeren Verbindungen erhaltenen Bindemittel können auch andere verträgliche Harze, wie Polyesterharze und Isocyanitharze allein oder in Kombination mit den vorgenannten polymeren verwendet werden, sofern diese eine ausreichende Verträglichkeit einander aufweisen.

Das thermoplatische polymere Bindemittel und die strahlenpolymerisierbaren monomere heterozyklische Verbindung können im Gewichtsverhältnis gleich oder größer 1 zu 20, insbesondere 1 zu 10 bis 1 zu 2 im Druckmedium anwesend sein. Durch das Mengeverhältnis dieser beiden wichtigsten Kompontenten lässt sich das Eigenschaftsprofil des Druckmediums steuern. Zur Modifizierung der Eigenschaften des Druckmediums können zusätzlich andere strahlenpolymeriserbare Monomere mit einer oder mehreren, insbesondere eine oder zwei polymerisationfähigen Vinyl-, Acryl- oder Methacrylgruppen Bestandteil des Druckmediums sein. Beispiel für derartige polymerisierbare Verbindungen sind Styrolderivate, wie Methylstyrol und Chlorstyrol, Alkyl(meth)acrylate, wie Methylmethacrylate, Ethyl(meth)acrylat, n-i-Propyl(meth)acrylat, Lauryl(meth)acrylat, Stearyl(meth)acrylat, 2-Hydroxyethylacrylat, Polyoxyalkylenglykolmono(meth)acrylat, wie Polyethylenglykolmono(meth)acrylat und Polypropylenglykolmono(meth)acrylat, und Tetrahydrofurfuryl(meth)methacrylat.

Zur Modifizierung der Eigenschaften des Druckmediums können zusätzlich auch Photopolymerisierbare Verbindungen mit zwei oder mehrere polymerisierbaren Doppelbindungen eingesetzt werden, wie Ethylenglykoldi(meth)acrylat, Propylenglykoldi(meth)acrylat, 1,4-Butandioldi(meth)acrylat, Di- oder Triethylenglykoldi(meth)acrylat, Trimethylolpropantri(meth)acrylat und Pentaerytritoltetra(meth)acrylat. Zur Weitermodifierung kann das Druckmedium zusätzlich auch Entschäumer, Weichmacher, Thioxptropiermittel und bekannte weitere Additive enthalten.

Die Mengenverhältnisse des im Druckmedium enthaltenen Komponenten kann in weiten Grenzen variieren. Bevorzugte Druckmedien enthalten mindestens 2 Gew.-%, insbesondere 5 bis 40 Gew.-% thermoplatisches Bindemittel, das aus einer oder mehreren Komponenten bestehen kann und insbesondere in Methacrylatpolymer oder Methacrylatcopolymer ist, 5 bis 95 Gew.-%, insbesondere 10 bis 90 Gew.-% einer oder mehrerer polymerisierbarer Monomere mit einem heterozyklischen Ring und 0 bis 85 Gew.-%, insbesondere 0 bis 70 Gew.-% andere strahlenpolymerisierbaren Monomere. Das Druckmedium enthält zusätzlich zu den vorgenannten Polymeren und polymerisierbaren Monomeren einen oder mehrere Photoinitiatoren in wirksamer Menge. Beispielhafte Photoinitiatoren sind Ketale, wie Benzyldimethylketal; Benzoine, wie Benzoinmethylether, Benzoinethylether; Anthrachinone, wie 1 Chloranthrachinon und 2 Ethylanthrachinon; Benzophenole, wie Benzonphenon, p-Dimethalaminobenzophenon; Propiophenone, wie 2-Hydroxy-2-methylpropiophenon; Dibenzosuberon; Schwefel enthaltenden Verbindungen, wie Dimethyldisulfid, Tetramethylthiurandisulfid, und Thioxanton.

Die zuvor genannte Additive werden in wirksamer Menge, üblicherweise in einer Menge von weniger als 15 Gew.-%, insbesondere weniger als 10 Gew.-% eingesetzt.

Ein weitere Gegenstand der Erfindung sind strahlenhärtbare Dekorpräparate, welche ein erfindungsgemäßes Druckmedium und eine dekorgebende Komponente aus der Reihe der Pigmente, Metallpulver, Pigmentvorstufen, Edelmetallverbindungen, welche in dem Druckmedium suspendiert und/oder gelöst sind, und bei Bedarf zusätzlich teilchenförmige Mittel zu Erhöhung der Pigment-Volumen-Konzentration (PVK).

Die Auswahl der dekorgebundenen Komponenten ist dem Fachmann bekannt, sie richtet sich nach den gewünschten Effekten, wie Farbe, Glanz- und Abriebseigenschaften sowie Resistenz gegen Säure und Basen. Gleiches gilt für die Einsatzmenge an diesen dekorgebunden Komponenten. Eine in Dekorpräparaten für keramische Dekore enthaltene weitere Komponenten sind Flussmittel, bei welchen es sich meistens im eine Kombination von Stoffen aus der Reihe der Glasfritten, Vorstufen von glasbildenden Oxiden und Silikaten handelt. Unter den Oxiden könne auch Haftoxide zugegen sein, welche beim Dekorbrand ein gute Haftung der Dekorschicht auf den keramischen Substrat, wie Glas und Keramik, bewirken.

Strahlenhärtbare Edelmetallpräparate enthalten beispielweise 10 bis 50 Gew.-%, insbesondere 30 bis 45 Gew.-% Gold in elementarer Form, 0,1 bis 20 Gew.-%, insbesondere 1 bis 5 Gew.-% Flussmittel, und 30 bis 80 Gew.-% eines erfindungsgemäßen Druckmediums. Bei Bedarf können zusätzlich lösliche Edelmetallverbindungen anwesend sein. Um mittels direkten und indirekten Druckverfahren bei derartigen Präparaten ästhetisch ansprechende Dekore mit hoher Oberflächenqualität zu erhalten, ist es zweckmäßig, anstelle von Verlaufshilfsmitteln auf Silikonbasis Mittel zu Erhöhung der Pigmentvolumenkonzentration einzusetzen. Bei letzteren handelt es sich um im Druckmedium unlösliche und unquellbare, beim Dekorbrand aber völlständig verbrennende teilchenförmige organische Verbindung, wie unvernetzter oder vernetzter organische Polymere (siehe EP-A 01 121 227).

Dekorpräparate, welche anorganische Pigmente und Glasfritten als Flussmittel enthalten, können im wesentlichen 1 bis 50 Gew.-% anorganische Pigmente, 1 bis 50 Gew.-% Glasfritten und 10 bis 90 Gew.-%, insbesondere 20 bis 40 Gew.-% erfindungsgemäßes Druckmedium enthalten.

Ein weiterer Gegenstand sind Abziehbilder zur Herstellung keramischer Dekore, umfassend ein flexibles Trägermaterial, wie Abziehbildträgerpapier, eine durch Wasser oder thermisch aktivierbare Trennschicht, darauf eine Bildschicht und darüber eine Deckschicht. Erfindungsgemäß enthalten die Bildschicht und/oder die Deckschicht ein strahlenhärtbares Druckmedium gemäß einem darauf gerichteten Ansprüche.

Die Abziehbildtechnik ist bei der Dekoration keramischer Substrate ein wohlbekanntes und vielfach angewandtes Verfahren. Die auf dem Abziehbildträger befindliche Bild- und Dekorschicht, bei Bedarf sind weitere Schichten wie Haftschicht und effektgebende Schichten anwesend, werden auf das zu dekorierende Substrat geschoben, und dann wird das Dekor eingebrannt.

Zur Herstellung eines keramischen Dekors wird ein strahlenhärtbares pastenförmiges Dekorpräparat, wobei dieses ein erfindungsgemäßes Druckmedium enthält, auf das zu dekorierende Substrat durch ein direktes oder indirektes Druckverfahren, insbesondere Siebdruckverfahren aufgebracht. Durch Bestrahlung der Dekorschicht mit UV-Licht oder einer anderen energiereichen Strahlung wird die Dekorschicht gehärtet. Das auf das keramische Substrat, das auch Glas umfasst, aufgebrachte Dekor wird dann auf das Substrat und die Zusammensetzung des Dekorpräparats abgestimmten Dekorbrandbedingungen eingebrannt.

Das erfindungsgemäße Druckmedium zeichnet sich durch eine gute Strahlenhärtbarkeit aus und weist die geforderte Eigenschaftskombination bezüglich hoher Reaktivität und damit rascher Härtung und Klebefreiheit der Dekorschicht und hoher Flexibilität der Dekorschicht und mit Erhaltbarkeit von konturenscharfen fehlerfreien Dekoren auf. Ein besonderer Vorteil des Druckmediums besteht darin, dass damit hergestellte Abziehbilder ihre Flexibilität auch nach langer Lagerzeit beibehalten und es nicht zu den gefürchteten Versprödungen und damit Dekorbrüchen kommt.

Diese Eigenschaftskombination lässt sich durch vorbekannte Druckmedien, enthaltend eine Mischung aus reaktiven bifunktionellen und flexibilisierenden monofunktionellen Monomeren nicht erreichen.

### Beispiele:

Die UV Medien aus Referenz Beispiel 1 und Vergleichsbeispiel 2 werden zur Anpastung von keramischen Farben im Verhältnis 10 Gewichtsteile Farbe zu 7-9 Gewichtsteile Medium verwendet. Über die Steuerung der Medienviskosität (Anteil an Methacrylatpolymer) sind Anpastverhältnisse von 10: 2 bis 10:20 möglich.

Abziehbilder erhält man durch Siebdruck auf entsprechendes Transferpapier (z.B. Meta Consort/ Hoffmann&Engelmann) und anschließende Härtung mit einer UV Lampe. Dabei sollte eine UV Dosis von 200-600 mJ/cm² erreicht werden (abhängig von der Farbe) sowie überfilmen des UV Druckes mit einem UVhärtenden Klarlack, der als Transferlack dient. (Bsp. 80450 /Ferro).

Zur generellen Prozedur der Abziehbilderherstellung in der keramischen Dekoration, siehe: A.Huber, "Decoration of porcelain, earthenware & Bone China", CFI, Jan. 1996.

Die nachfolgende Tabelle zeigt die Zusammensetzung eines erfindungsgemäßen Mediums und einiger vorbekannter Medien.

**Tabelle 1**

| Beispiel 1 (B1) Referenz | | |
|---|---|---|
| | | |
| Heterocyclisches Monomer, monofunktional | Trimethylolpropanformalacrylat | 60% |
| MMA/n-BuMA Copolymer | Degalan^{®} P24 | 22% |
| Gycerin-Fettsäureester (Thixotropiermittel) | Thixatrol^{®} ST | 2% |
| Phthalatweichmacher | Edenol^{®} 344 | 6% |
| Photoinitiator | Darocure^{®} 1173 | 5% |
| Synergist | Qantacure^{®} EPD | 2% |
| Photoinitiator | Quantacure^{®} ITX | 3% |
| | | |

| Vergleichsbeispiel 1 (VB1) | | |
|---|---|---|
| | | |
| Lineares Monomer, monofunktional | Ethyldiglykolacrylat | 30% |
| Lineares Monomer, bifunktional | Dipropylenglykoldiacrylat | 30% |
| MMA/n-BuMA Copolymer | Degalan^{®} P24 | 22% |
| Gycerin-Fettsäureester (Thixotropiermittel) | Thixatrol^{®} ST | 2% |
| Phthalatweichmacher | Edenol^{®} 344 | 6% |
| Photoinitiator | Darocure^{®} 1173 | 5% |
| Synergist | Quantacure^{®} EPD | 2% |
| Photoinitiator | Quantacure^{®} ITX | 3% |

| Vergleichsbeispiel 2 (VB2) | | |
|---|---|---|
| | | |
| Lineares Monomer, monofunktional | Ethyldiglykolacrylat | 60% |
| MMA/n-BuMA Copolymer | Degalan^{®} P24 | 22% |
| Gycerin-Fettsäureester (Thixotropiermittel) | Thixatrol^{®} ST | 2% |
| Phthalatweichmacher | Edenol^{®} 344 | 6% |
| Photoinitiator | Darocure^{®} 1173 | 5% |
| Synergist | Quantacure^{®} EPD | 2% |
| Photoinitiator | Quantacure^{®} ITX | 3% |
| | | |

| Vergleichsbeispiel 3 (VB3) | | |
|---|---|---|
| | | |
| Lineares Monomer, bifunktional | Dipropylenglykoldiacrylat | 60% |
| MMA/n-BuMA Copolymer | Degalan^{®} P24 | 22% |
| Gycerin-Fettsäureester (Thixotropiermittel) | Thixatrol^{®} ST | 2% |
| Phthalatweichmacher | Edenol^{®} 344 | 6% |
| Photoinitiator | Darocure^{®} 1173 | 5% |
| Synergist | Quantacure^{®} EPD | 2% |
| Photoinitiator | Quantacure^{®} ITX | 3% |

Die Eigenschaften der unter Einsatz der Medien gemäß Tabelle 1 erzeugten Abziehbilder folgen aus der Tabelle 2.

**Tabelle 2:**

| Medium Nr. | Alter des Abziehbilds | Reaktivität (Härtung) | Flexibilität / Dekorqualität |
|---|---|---|---|
| B1 | 6 h | gut | gut / gut |
| | 5 Tage | gut | gut / gut |
| | 1 Monat | gut | gut / gut |
| VB1 | 6 h | gut | gut / gut |
| | 5 Tage | gut | mäßig / Konturen wässrig |
| | 1 Monat | gut | spröde / starke Dekorfehler |
| VB2 | 6 h | sehr gut | gut |
| | 5 Tage | reduziert durch Vernetzung | vollständige Versprödung / Brüche des Dekorbilds bei der Applikation |
| VB3 | 6 h | Ungenügende | gut |
| | | Härtung, | |
| | | klebrige | |
| | | Oberfläche | |
| | 5 Tage | geringere | gut |
| | | Klebefähigkeit | |

## Patentansprüche

1. Strahlenhärtbares Druckmedium zur Herstellung keramischer Dekore, umfassend ein polymeres thermoplastisches Bindemittel und mindestens eine strahlenhärtbare monomere Verbindung aus der Reihe der einen heterocyclischen Ring enthaltenden olefinischen Verbindungen, wobei das polymere Bindemittel in der monomeren Verbindung löslich ist,
wobei der heterocyclische Ring 5 bis 6 Ringglieder und als Heteroatom mehrere Sauerstoffatome enthält, **dadurch gekennzeichnet, dass** mindestens eine strahlenpolymerisierbare Vinyl-, Acryl- oder Methacrylgruppe direkt oder über ein ein- bis sechsgliedriges Brückenglied am heterocyclischen Ring gebunden ist, ein einem Ring-Heteroatom benachbartes Kohlenstoffatom mindestens ein abstrahierbares Wasserstoffatom aufweist und die polymerisierbare monomere Verbindung einen 1,3-Dioxolan-, 1,3- oder 1,4-Dioxanring und einen (Meth)acryloxy-(C₁-C₄)-alkyl- oder (Meth)arcyloy-amino-(C₁-C₄)-alkylsubstituenten aufweist.

2. Druckmedium nach Anspruch 1,
**dadurch gekennzeichnet,**
**dass** die polymerisierbare monomere Verbindung Trimethylolethan- oder -propanmonoformalmono(meth)acrylsäureester ist.

3. Druckmedium nach einem der Ansprüche 1 bis 2,
**dadurch gekennzeichnet,**
**dass** das thermoplastische polymere Bindemittel und die strahlenpolymerisierbare heterocyclische monomere Verbindung im Gewichtsverhältnis von gleich oder größer 1 zu 20, insbesondere 1 zu 10 bis 1 zu 2, anwesend sind.

4. Druckmedium nach einem der Ansprüche 1 bis 3,
**dadurch gekennzeichnet,**
**dass** es zusätzlich andere strahlenpolymerisierbare Monomere, insbesondere solche mit einer oder zwei polymerisationsfähigen Vinyl-, Acryl- oder Methacrylgruppen, in einer Menge bis zu 85 Gew.-% enthält

5. Druckmedium nach einem der Ansprüche 1 bis 4,
**dadurch gekennzeichnet,**
**dass** es mindestens 2 Gew.-%, insbesondere 5 bis 40 Gew.-% thermoplastisches Bindemittel, insbesondere ein Methacrylatpolymer oder -copolymer, 5 bis 95 Gew.-%, insbesondere 10 bis 90 Gew.-% polymerisierbare Monomere mit einem heterocyclischen Ring und 0 bis 85 Gew.-% insbesondere 0 bis 70 Gew.-% andere strahlenpolymerisierbare Monomere enthält.

6. Druckmedium nach einem der Ansprüche 1 bis 5,
**dadurch gekennzeichnet,**
**dass** es 1 bis 20 Gew.-% Photoinitiator enthält.

7. Druckmedium nach einem der Ansprüche 1 bis 6,
**dadurch gekennzeichnet,**
**dass** es zusätzlich ein oder mehrere Additive aus der Reihe der Entschäumer, Phthalatweichmacher und Thioxotropiermittel in einer Gesamtmenge bis 15 Gew.-% enthält.

8. Strahlenhärtbares Dekorpräparat, umfassend ein Druckmedium und eine dekorgebende Komponente aus der Reihe der Pigmente, Metallpulver, Pigmentvorstufen, Edelmetallverbindungen, welche in einem Druckmedium suspendiert und/oder gelöst sind, und bei Bedarf zusätzlich teilchenförmige Mittel zu Erhöhung der Pigment-Volumen-Konzentration (PVK),
**dadurch gekennzeichnet,**
**dass** es ein Druckmedium gemäß einem der Ansprüche 1 bis 7 in einer für eine Druckpaste geeigneten Menge enthält.

9. Abziehbild zur Herstellung keramischer Dekore, umfassend ein flexibles Trägermaterial, eine durch Wasser oder thermisch aktivierbare Trennschicht, darauf eine Bildschicht und darüber eine Deckschicht,
**dadurch gekennzeichnet,**
**dass** die Bildschicht und/oder die Deckschicht unter Verwendung eines strahlenhärtbaren Druckmediums gemäß einem der Ansprüche 1 bis 7 oder die Bildschicht mit einem Dekorpräparat gemäß Anspruch 8 hergestellt worden ist.

10. Verfahren zur Herstellung eines keramischen Dekors, umfassend Aufbringen eines strahlenhärtbaren Dekorpräparats auf das zu dekorierende Substrat durch ein direktes oder indirektes Druckverfahren, insbesondere Siebdruckverfahren, Bestrahlung mit UV-Licht zwecks Härtung der Dekorschicht und Einbrennen derselben unter Dekorbrandbedingungen,
**dadurch gekennzeichnet,**
**dass** man ein Dekorpräparat gemäß Anspruch 8 auf ein keramisches Substrat oder einen Abziehbildträger aufdruckt und im Falle der Abziehbildtechnik das Dekor in Form eines Schiebebildes vom Abziehbildträger löst und auf das keramische Substrat überträgt.

## Claims

1. Radiation-curable printing medium for producing ceramic decorations, comprising a polymeric thermoplastic binder and at least one radiation-curable monomeric compound from the series of olefinic compounds containing a heterocyclic ring, the polymeric binder being soluble in the monomeric compound and the heterocyclic ring containing 5 to 6 ring members and a plurality of oxygen atoms as heteroatom, **characterised in that** at least one radiation-polymerisable vinyl, acrylic or methacrylic group is bound to the heterocyclic ring directly or via a one- to six-membered binding link, a carbon atom adjacent to a ring heteroatom has at least one abstractable hydrogen atom and the polymerisable monomeric compound has a 1,3-dioxolane ring, a 1,3- or 1,4-dioxane ring and a (meth)acryloxy-(C₁-C₄)-alkyl- or (meth)acryloyl-amino-(C₁-C₄)-alkyl substituent.

2. Printing medium according to claim 1,
**characterised in that**
the polymerisable monomeric compound is trimethylolethane or trimethylolpropane monoformal mono(meth)acrylic acid ester.

3. Printing medium according to one of claims 1 to 2,
**characterised in that**
the thermoplastic polymeric binder and the radiation-polymerisable heterocyclic monomeric compound are present in the weight ratio of greater than or equal to 1 to 20, in particular 1 to 10 to 1 to 2.

4. Printing medium according to one of claims 1 to 3,
**characterised in that**
it additionally includes other radiation-polymerisable monomers, in particular those having one or two polymerisable vinyl, acrylic or methacrylic groups, in an amount of up to 85 wt.%.

5. Printing medium according to one of claims 1 to 4,
**characterised in that**
it contains at least 2 wt.%, in particular 5 to 40 wt.%, of thermoplastic binder, in particular a methacrylate polymer or copolymer, 5 to 95 wt.%, in particular 10 to 90 wt.%, of polymerisable monomers having a heterocyclic ring, and 0 to 85 wt.%, in particular 0 to 70 wt.%, of other radiation-polymerisable monomers.

6. Printing medium according to one of claims 1 to 5,
**characterised in that**
it contains 1 to 20 wt.% of photoinitiator.

7. Printing medium according to one of claims 1 to 6,
**characterised in that**
it additionally contains one or more additives from the series comprising defoaming agents, phthalate plasticisers and thixotropic agents, in a total amount of up to 15 wt.%.

8. Radiation-curable decorative preparation comprising a printing medium and a decorative component from the series comprising pigments, metal powders, pigment precursors, precious metal compounds, which are suspended and/or dissolved in a printing medium, and additionally, if necessary, particulate agents to increase the pigment volume concentration (PVC),
**characterised in that**
it contains a printing medium according to one of claims 1 to 7 in an amount suitable for a printing paste.

9. Transfer image for producing ceramic decorations, comprising a flexible support, a water-activated or heat-activated release layer, followed by an image layer, which is followed by a top layer,
**characterised in that**
the image layer and/or the top layer were produced using a radiation-curable printing medium according to one of claims 1 to 7 or the image layer was producing with a decorative preparation according to claim 8.

10. Process for producing a ceramic decoration, comprising application of a radiation-curable decorative preparation onto the substrate to be decorated by means of a direct or indirect printing process, in particular screen printing, irradiation with UV light to cure the decorative layer and firing thereof under decorative firing conditions,
**characterised in that**
a decorative preparation according to claim 8 is printed onto a ceramic substrate or a transfer image support and in the case of the transfer image method the decoration in the form of a decal is released from the transfer image support and transferred to the ceramic substrate.

## Revendications

1. Milieu d'impression durcissable par rayonnement pour la fabrication de décors céramiques, comprenant un liant thermoplastique polymère et au moins un composé monomère durcissable par rayonnement de la série des composés oléfiniques contenant un noyau hétérocyclique, le liant polymère étant soluble dans le composé monomère, le noyau hétérocyclique contenant 5 à 6 chaînons de cycle, et, comme hétéroatomes, plusieurs atomes d'oxygène,
**caractérisé par le fait qu'**au moins un groupe vinyle, acryle ou méthacryle polymérisable par rayonnement est lié directement ou par l'intermédiaire d'un élément de pont à un à six chaînons sur le noyau hétérocyclique, un atome de carbone voisin d'un hétéroatome de cycle présente au moins un atome d'hydrogène extractible, et le composé monomère polymérisable présente un noyau 1,3-dioxolanne, 1,3- ou 1,4-dioxanne et un substituant (méth) acryloxy- (C₁-C₄)-alkyle ou (méth)acryloyl-amino-(C₁-C₄)-alkyle.

2. Milieu d'impression selon la revendication 1,
**caractérisé par le fait que** le composé monomère polymérisable est un mono(méth)acrylate de triméthyloléthane- ou -propane monoformal.

3. Milieu d'impression selon l'une des revendications 1 ou 2,
**caractérisé par le fait que** le liant polymère thermoplastique et le composé monomère hétérocyclique polymérisable par rayonnement sont présents dans le rapport pondéral égal ou supérieur à 1 à 20, en particulier de 1 à 10 à 1 à 2.

4. Milieu d'impression selon l'une des revendications 1 à 3,
**caractérisé par le fait**
**qu'**il contient en outre d'autres monomères polymérisables par rayonnement, en particulier des polymères avec un ou deux groupes vinyle, acryle ou méthacryle polymérisables dans une quantité allant jusqu'à 85 % en poids.

5. Milieu d'impression selon l'une des revendications 1 à 4,
**caractérisé par le fait qu'**il contient au moins 2 % en poids, en particulier 5 à 40 % en poids de liant thermoplastique, en particulier un polymère ou copolymère de méthacrylate, 5 à 95 % en poids, en particulier 10 à 90 % en poids de monomères polymérisables ayant un noyau hétérocyclique et 0 à 85 % en poids, en particulier 0 à 70 % en poids, d'autres monomères polymérisables par rayonnement.

6. Milieu d'impression selon l'une des revendications 1 à 5,
**caractérisé par le fait**
**qu'**il contient 1 à 20 % en poids de photoinitiateur.

7. Milieu d'impression selon l'une des revendications 1 à 6,
**caractérisé par le fait qu'**il contient en outre un ou plusieurs additifs de la série des agents anti-mousse, plastifiants de type phtalate et agents thioxotropes dans une quantité totale allant jusqu'à 15 % en poids.

8. Préparation de décor durcissable par rayonnement, comprenant un milieu d'impression et un composant donnant un décor de la série des pigments, des poudres métalliques, des précurseurs de pigments, des composés de métaux nobles, lesquels sont mis en suspension et/ou dissous dans un milieu d'impression, et, en cas de besoin, en outre des agents formant des particules pour l'augmentation de la concentration pigmentaire volumique (PVK),
**caractérisée par le fait qu'**elle contient un milieu d'impression tel que défini à l'une des revendications 1 à 7 dans une quantité appropriée pour une pâte d'impression.

9. Décalcomanie pour la fabrication de décors céramiques, comprenant une matière de support flexible, une couche de séparation activable par l'eau ou thermiquement, une couche d'image sur celle-ci et par-dessus une couche de recouvrement,
**caractérisée par le fait que** la couche d'image et/ou la couche d'impression ont été fabriquées avec utilisation d'un milieu d'impression durcissable par rayonnement tel que défini à l'une des revendications 1 à 7 ou la couche d'image a été fabriquée avec une préparation de décor telle que définie à la revendication 8.

10. Procédé de fabrication d'un décor céramique, comprenant l'application d'une préparation de décor durcissable par rayonnement sur le substrat à décorer par un procédé d'impression directe ou indirecte, en particulier un procédé de sérigraphie, l'irradiation par une lumière UV pour le durcissement de la couche de décor et la cuisson de celle-ci dans des conditions de cuisson de décor,
**caractérisé par le fait**
**que** l'on imprime une préparation de décor telle que définie à la revendication 8 sur un substrat céramique ou un support de décalcomanie et, dans le cas de la technique de décalcomanie, on dissout le décor sous la forme d'une image à décalquer du support de décalcomanie et on le transfère sur le substrat céramique.
